# EUROPÄISCHE PATENTSCHRIFT

(11) **EP 3 797 184 B1**
(45) Veröffentlichungstag und Bekanntmachung des Hinweises auf die Patenterteilung: **07.06.2023**
(21) Anmeldenummer: 19745554.6
(22) Anmeldetag: 26.06.2019
(51) Int. Cl.: C25D 3/46, C25D 7/00, C25D 7/06, C25D 15/00, H01H 1/027, C25D 5/34, C25D 5/48, H01H 1/0233, H01H 1/0237

(54) **SILBERELEKTROLYT ZUR ABSCHEIDUNG VON DISPERSIONS-SILBERSCHICHTEN UND KONTAKTOBERFLÄCHEN MIT DISPERSIONS-SILBERSCHICHTEN**
SILVER ELECTROLYTE FOR DEPOSITING DISPERSION SILVER LAYERS AND CONTACT SURFACES WITH DISPERSION SILVER LAYERS
SOLUTION D'ARGENTURE ÉLECTROLYTIQUE DESTINÉE AU DÉPÔT DE COUCHES DE DISPERSIONS D'ARGENT, ET SURFACES DE CONTACT DOTÉES DE COUCHES DE DISPERSIONS D'ARGENT

(30) Priorität: 05.07.2018 DE 102018005348
(43) Veröffentlichungstag der Anmeldung: 31.03.2021
(60) Teilanmeldung: 23171227.4
(73) Patentinhaber: Rosenberger Hochfrequenztechnik GmbH & Co. KG, 83413 Fridolfing (DE); Dr.-Ing. Max Schlötter GmbH & Co. KG, 73312 Geislingen/Steige (DE)
(72) Erfinder: STADLER, Andreas, 83416 Saaldorf-Surheim (DE); SOTTOR, Robert, 65933 Frankfurt (DE); WAGNER, Reinhard, 5201 Seekirchen am Wallersee (AT); DANDL, Christian, 83413 Fridolfing (DE); HEITMÜLLER, Sebastian, 73326 Deggingen (DE)
(74) Vertreter: Aera A/S
(86) Internationale Anmeldenummer: PCT/DE2019/100597
(87) Internationale Veröffentlichungsnummer: WO 2020/007408

(56) Entgegenhaltungen:
- CN-A- 105 297 095
- DE-A1- 1 521 025
- DE-A1- 2 543 082
- DE-A1- 3 328 067
- DE-A1-102015 102 453
- DE-C3- 2 543 082

## Beschreibung

Die Erfindung betrifft einen Silberelektrolyten zur Abscheidung von Silberschichten auf Substraten, ein Verfahren zur Abscheidung einer Dispersions-Silberschicht auf einem Substrat sowie Kontaktoberflächen, wobei auf einem Substrat eine elektrochemisch abgeschiedene Dispersions-Silberschicht angeordnet ist. Zudem betrifft die Erfindung die Verwendung der Kontaktoberflächen für elektrische Kontakte in Steckverbindungen und die Verwendung eines Silberelektrolyten zur Beschichtung eines Substrats mittels Bandgalvanisierung.

Silber ist ein äußerst vielseitiger Werkstoff. Wegen seiner Dehnbarkeit und Weichheit lässt er sich auf verschiedenste Arten verarbeiten. Silber leitet von allen Metallen Wärme und Elektrizität am besten. Dies macht Silber zu einem interessanten Werkstoff für die Elektro- und Elektronikindustrie unter anderem für die Beschichtung von Oberflächen, insbesondere Kontaktoberflächen. Als Schnittstellen zur Übertragung hoher elektrischer Ströme werden Stecker und Steckkontakte eingesetzt, die einen möglichst geringen elektrischen Kontaktwiderstand aufweisen, weshalb Silberbeschichtungen häufig bei Kontaktelementen, die in einem solchen Steckverbinder eingebaut und im gesteckten Zustand für den elektrischen Kontakt verantwortlich sind, verwendet werden.

Zur Silberbeschichtung von Substraten und zur Herstellung von Kontaktoberflächen werden Silberelektrolyte verwendet. Hierbei werden als Silberelektrolyte verschiedene silberhaltige Lösungen und Dispersionen bezeichnet, die zum elektrochemischen, insbesondere galvanischen Versilbern von Oberflächen dienen. Silberelektrolytlösungen können hierbei verschiedenste weitere Zusätze wie beispielsweise Kornverfeinerer, Dispergiermittel, Glanzbildner oder Feststoffbestandteile beinhalten.

Für Anwendungen im Elektro- und Elektronikbereich, insbesondere bei Steckern und Steckkontakten sind besonders die Leitfähigkeit, der Kontaktwiderstand und der Reibwert relevant. Insbesondere im Hinblick auf die zunehmende Elektromobilität ist mit einer erhöhten Nachfrage nach Silberschichten, insbesondere galvanisch abgeschiedenen Silberschichten zu rechnen.

Werden zwei silberbeschichtete Oberflächen übereinander hinwegbewegt, so ist hierfür eine hohe Kraft notwendig, da Steck- und Ziehkräfte wirken. Hieran zeigt sich der Nachteil von Kontakten mit Silberoberflächen, da diese einen relativ hohen Reibkoeffizienten, der insbesondere bei Steckkontakten zu hohen Steck- und Ziehkräften führt, aufweisen. Durch die hohen Reibkoeffizienten kommt es bei Silberoberflächen zu Verschleiß, wodurch die Anzahl möglicher Steckzyklen stark eingeschränkt wird. Hinzu tritt die Problematik, dass Silberoberflächen zum Kaltverschweißen neigen. Allerdings ist der Kontaktwiderstand eines Systems zweier silberbeschichteter Oberflächen vorteilhaft.

In DE 10346206 A1 wird eine Kontaktoberfläche für elektrische Kontakte beschrieben. In der gezeigten Silberschicht, welche mittels galvanischer Verfahren hergestellt wurde, sind fein disperse Graphitteilchen eingelagert. Durch den Einbau von Graphit in die Silberschicht wird eine Reduktion der Reibung erzielt, wodurch niedrigere Steckkräfte, ein verbesserter Korrosionsschutz sowie eine durch den erhöhten Verschleißschutz längere Lebensdauer der Kontakte erzielt wurde. Gleichzeitig wird eine gute elektrische Kontaktierung gewährleistet.

In DE 10 2008 030 988 B4 wird die elektrochemische Beschichtung eines Bauteils beschrieben, wobei die Schicht ein metallisches Gefüge aufweist und in dieser Schicht Kohlenstoffnanoröhren und ein Trockenschmierstoff mit eingebaut werden. Durch den Einbau von Kohlenstoffnanoröhren werden die elektrische Leitfähigkeit und die Wärmeableitung der Schicht erhöht und durch die Mischung mit weiteren Trockenschmierstoffen kann die Schicht hinsichtlich ihres Verschleißverhaltens für unterschiedliche Anwendungszwecke optimiert werden.

Die DE 2543082 A1 offenbart einen Silberelektrolyten zur Herstellung von Silberüberzügen, der zudem Graphit, Glanzzusätze und Netzmittel enthält. Das Graphit muss durch Umpumpen des elektrolytenthaltenden Bades während der Abscheidung in Schwebe gehalten werden.

Im Stand der Technik werden Silberelektrolyten beschrieben, die zusätzlich Glanzbildner oder weitere Substanzen, die die Abscheidung verbessern wie Xanthogenaten, Carbamaten oder Türkischrotöl, enthalten. Ebenso werden Elektrolytlösungen gezeigt, die mechanische Eingriffe benötigen, um die Feststoffbestandteile in Schwebe zu halten. Ebenso werden im Stand der Technik Elektrolyten beschrieben, die verschiedene Feststoffbestandteile enthalten, um Eigenschaften abgeschiedener Oberflächen, die durch aufwendige Additivsysteme verloren gehen, zu erhalten.

Ein Nachteil bekannter Silberelektrolyten zur Abscheidung von Silber auf Oberflächen liegt darin, dass sie die zu dispergierenden Stoffe nicht ausreichend gleichmäßig im Elektrolyten dispergieren, was einerseits zur inhomogenen Verteilung der Feststoffbestandteile in den abgeschiedenen Schichten führt und andererseits dazu führt, dass teilweise gar keine Abscheidung erfolgt. Ebenso sind einige Elektrolyten gar nicht geeignet verschiedene Arten von Feststoffbestandteilen gleichermaßen zu dispergieren, so dass ein Umpumpen oder Rühren während der Abscheidung notwendig ist, was sich negativ auf die Homogenität der erhaltenen Oberflächen auswirkt. Um diese Nachteile zu überwinden, werden häufig aufwendige Additivsysteme eingesetzt, die sich nachteilig auf die abgeschiedenen Oberflächen auswirken können und zudem zu erhöhten Kosten führen.

Bekannte Elektrolyte sind nicht geeignet weitere Partikel, insbesondere Trockenschmierstoffe, ausreichend zu dispergieren, so dass Oberflächen erhalten werden, in die weitere Substanzen wie Additive mit eingebaut werden, die die erzeugten Dispersionsschichten negativ beeinflussen. Hierdurch wird unter anderem die Inhomogenität bekannter Oberflächen hervorgerufen.

Nachteilhaft ist zudem, dass bislang häufig Kombinationen von Feststoffbestandteilen eingesetzt werden müssen, wie zum Beispiel Kohlenstoffnanoröhren und Trockenschmierstoffe, um die passenden Oberflächeneigenschaften zu erzielen, und die Nachteile der Additivsysteme auszugleichen. Dies führt ebenfalls dazu, dass weitere Substanzen die Homogenität negativ beeinflussen und zudem die Kosten weiter erhöhen. Außerdem machen Additive, die die Abscheidung verbessern sollen, die Prozessführung und die Prozessüberwachung aufwendiger und komplizierter.

Ein weiterer Nachteil bekannter Elektrolyten ist, dass die Abscheidetemperatur hoch gewählt werden muss, um eine ausreichende Abscheidung zu gewährleisten.

Es ist daher die Aufgabe der Erfindung Silberelektrolyte bereitzustellen, die Feststoffbestandteile gut dispergieren und die es gleichzeitig erlauben auf aufwendige Additivsysteme zu verzichten, um eine homogene Abscheidung zu erzielen. Eine weitere Aufgabe der Erfindung besteht darin, Oberflächen, insbesondere Kontaktoberflächen, bereitzustellen, die eine erhöhte Verschleißbeständigkeit und eine gute elektrische Leitfähigkeit aufweisen. Ebenso ist es Aufgabe der Erfindung ein Abscheidungsverfahren bereitzustellen, zur Herstellung beschichteter Oberflächen, insbesondere Kontaktoberflächen, mit verbesserter Haltbarkeit.

Haltbarkeit bedeutet vorliegend eine Verringerung der benötigten Steckkräfte einhergehend mit einer Steigerung der möglichen Steckzyklen, eine Reduzierung des Kaltverschweißens, das heißt des Verschweißens der weichen Silberschichten auf Grund von Mikrovibrationen, sowie eine Beibehaltung eines möglichst günstigen Kontaktwiderstands über einen möglichst langen Zeitraum.

Die der Erfindung zu Grunde liegende Aufgabe wird durch einen Silberelektrolyten gemäß Anspruch 1 gelöst. Bevorzugte Ausführungsformen des erfindungsgemäßen Silberelektrolyten sind in den Unteransprüchen angegeben.

Gegenstand der Erfindung ist weiterhin ein Verfahren zur Abscheidung einer Dispersions-Silberschicht auf einem Substrat gemäß Anspruch 4. Bevorzugte Ausführungsformen des erfindungsgemäßen Verfahrens sind in den Unteransprüchen angegeben.

Die Erfindung betrifft auch die Verwendung des erfindungsgemäßen Dispersions-Silberelektrolyten zur Beschichtung eines Substrats mittels Bandanwendung.

Der Silberelektrolyt zur Abscheidung von Silberschichten auf Substraten umfasst erfindungsgemäß,
a) Kaliumsilbercyanid mit einem Gehalt von mindestens 50 g/L,
b) Kaliumcyanid mit einem Gehalt von mindestens 100 g/L,
c) wenigstens einen Kornverfeinerer mit einem Gehalt von 0,2 bis 10 g/L, wobei Kornverfeinerer Substanzen sind, die die Korngröße der Silberabscheidung zu kleineren Korngrößen verschieben;
d) wenigstens ein Dispergiermittel mit einem Gehalt von 1 bis 10 g/L und
e) wenigstens einen Feststoffbestandteil mit einem Gehalt von 1 bis 150 g/L,

wobei die Partikel des Feststoffbestandteils eine mittlere Partikelgröße,d₅₀, von 10 nm - 100 µm aufweisen;
wobei der wenigstens eine Kornverfeinerer ausgewählt ist aus Naphthalinsulfonsäure, Naphthalinsulfonsäurederivaten oder Mischungen daraus; und
wobei das wenigstens eine Dispergiermittel Alkylsulfate mit C₁-C₂₀-Alkylresten, die unsubstituiert oder wahlweise substituiert sein können, enthält.

Überraschenderweise hat sich gezeigt, dass mit einem Silberelektrolyten in der gezeigten Zusammensetzung verschiedene Feststoffbestandteile homogen dispergiert werden können, um Oberflächen, die eine Dispersions-Silberschicht aufweisen, mit erhöhter Haltbarkeit und guter elektrischer Leitfähigkeit zu erhalten. Der erfindungsgemäße Elektrolyt zeichnet sich dadurch aus, dass mit ihm verschiedenste Dispersions-Silberschichten erzeugt werden können. Diese Schichten zeichnen sich in Abhängigkeit der Art und Menge der eingebauten Feststoffbestandteile durch ihren guten Kontaktwiderstand bei verbessertem Reibwert oder erhöhter Härte aus. Die Haltbarkeit, bezogen auf den Abrieb beziehungsweise Durchrieb dieser Schichten übertrifft einfache Silberschichten. Der erfindungsgemäße Elektrolyt eignet sich zudem besonders gut für die Verwendung von Feststoffbestandteilen als zu dispergierende Stoffe. Zudem werden durch den erfindungsgemäßen Elektrolyten Silberschichten erhalten, die eine gute Leitfähigkeit besitzen, so dass auf die Zugabe von weiteren Substanzen wie beispielsweise Kohlenstoffnanoröhren verzichtet werden kann. Weiterhin kann der erfindungsgemäße Elektrolyt sowohl bei niedrigen als auch bei hohen Stromdichten verwendet werden. Somit ist der Elektrolyt für verschiedenste Anwendungen einsetzbar und kann beispielsweise bei der Bandgalvanisierung eingesetzt werden.

Im erfindungsgemäßen Elektrolyten werden die Feststoffbestandteile homogen dispergiert. Durch die besonders homogene Dispergierung wird der homogene Einbau der Feststoffbestandteile in den abgeschiedenen Silberschichten gewährleistet. Außerdem wird durch die Verwendung des erfindungsgemäßen Elektrolyten der Miteinbau von Additiven, der die Homogenität regelmäßig negativ beeinflusst, reduziert.

Außerdem eignet sich der Elektrolyt für den Einsatz mit verschiedenen Feststoffbestandteilen, so dass die Oberflächeneigenschaften auf unterschiedliche Anwendungen angepasst werden können. Ein weiterer Vorteil des erfindungsgemäßen Elektrolyten ist, dass die Schichtdicke variiert und der jeweiligen Anwendung angepasst werden kann.

"Substituiert" im Sinne der Erfindung bedeutet, dass ein Wasserstoffatom an einem Kohlenwasserstoff durch ein anderes Atom oder Atomgruppe ersetzt wird.

Im Sinne der Erfindung meint "Feststoffbestandteil" einen Bestandteil, der nicht in Lösung vorliegt, sondern im Elektrolyten als Feststoff vorliegt und im Zusammenhang mit den vorliegenden Dispersions-Silberschichten auch als feindisperser Feststoffbestanteil bezeichnet wird.

Im Sinne der Erfindung gibt die mittlere Partikelgröße (d₅₀) an, dass 50% der der Partikel eines Feststoffbestandteils einen kleineren Durchmesser haben als der angegebene Wert.

"Kornverfeinerer" im Sinne der Erfindung sind Substanzen, die die Korngröße der Silberabscheidung zu kleineren Korngrößen verschieben.

"Trockenschmierstoffe" im Sinne der Erfindung sind Stoffe, die die Gleiteigenschaft einer Oberfläche verbessern.

"Hartstoffe" im Sinne der Erfindung sind Stoffe, die sich durch ihre besonders hohe Härte auszeichnen.

Der Silberelektrolyt ist eine Lösung, bevorzugt eine wässrige Lösung. Es können auch weitere Lösungsmittel im Elektrolyt enthalten sein.

Alle Gehaltsangaben in g/L sind, sofern nicht anders angegeben, im Folgenden auf das Gesamtvolumen an Elektrolyt bezogen.

Vorteilhaft ist der Gehalt an Silber im Elektrolyten mindestens 15 g/L, bevorzugt mindestens 20 g/L, bevorzugter mindestens 25 g/L und noch bevorzugter mindestens 27 g/L.

Vorzugsweise ist der Gehalt an Silber im Elektrolyten zwischen 1 und 100 g/L, bevorzugt zwischen 5 und 50 g/L und noch bevorzugter zwischen 10 und 30 g/L.

Vorzugsweise beträgt der Gehalt von Kaliumsilbercyanid im Elektrolyten höchstens 150 g/L, bevorzugt höchstens 125 g/L, bevorzugter höchstens 100 g/L und noch bevorzugter höchstens 75 g/L.

Vorzugsweise ist der Gehalt an Kaliumcyanid mindestens 120 g/L und bevorzugt mindestens 140 g/L.

Vorteilhaft ist der Gehalt an Kornverfeinerer zwischen 0,2 und 8 g/L, bevorzugt zwischen 0,3 und 6 g/L, bevorzugter zwischen 0,4 und 5 g/L und noch bevorzugter zwischen 0,5 und 3 g/L.

Vorzugsweise enthält das Dispergiermittel ein Natriumalkylsulfat mit C₁-C₂₀-Alkylresten, die unsubstituiert oder wahlweise substitutiert sein können. Die Alkylreste können linear und/oder verzweigt sein.

Vorzugsweise ist der Gehalt des wenigstens einen Dispergiermittels zwischen 0,2 und 9 g/L, bevorzugt zwischen 0,3 und 8 g/L, bevorzugter zwischen 0,4 und 7 g/L und noch bevorzugter zwischen 0,5 und 6 g/L.

Vorzugsweise ist der Gehalt des wenigstens einen Feststoffbestandteils zwischen 5 und 125 g/L, bevorzugt zwischen 10 und 100 g/L, bevorzugter zwischen 15 und 90 g/L und noch bevorzugter zwischen 20 und 80 g/L.

Vorzugsweise ist der Gehalt des wenigstens einen Feststoffbestandteils mindestens 5 g/L, bevorzugt mindestens 10 g/L, bevorzugter mindestens 15 g/L, noch bevorzugter mindestens 20 g/L, noch weiter bevorzugt mindestens 30 g/L und am bevorzugtesten mindestens 40 g/L.

In einer vorteilhaften Ausführungsform weisen die Partikel des wenigstens einen Feststoffbestandteils eine mittlere Partikelgröße (d₅₀) von 50 nm bis 75 µm, bevorzugt 100 nm bis 50 µm, bevorzugter 500 nm bis 35 µm und noch bevorzugter von 1 µm bis 20 µm auf. Die Durchmesser und somit auch die mittlere Partikelgröße (d₅₀) der Feststoffbestandteile werden mittels Laserbeugung bestimmt.

Als Feststoffbestanteile kommen alle Arten von organischen oder anorganischen Partikeln in Betracht.

Vorzugsweise ist der wenigstens eine Feststoffbestandteil ein Trockenschmierstoff, ein Hartstoff oder Mischungen daraus, bevorzugt ein Trockenschmierstoff.

In einer vorteilhaften Ausführungsform ist der wenigstens eine Feststoffbestandteil ausgewählt aus Silikaten, Sulfiden, Carbiden, Nitriden, Oxiden, Seleniden, Telluriden, organischen und anorganischen Polymeren und Kohlenstoffmodifikationen. Unter Kohlenstoffmodifikationen werden vorliegend im Sinne der Erfindung neben Diamant, Londsdaleit, Fullerenen und Graphit auch Graphen, Kohlenstoffnanoröhren, Ruß, Aktivkohle, Graphitfluorid, Graphitoxid, Al₂O₃ umhülltes Graphit, nicht-graphitischer und weitere Formen von Kohlenstoff verstanden.

Gemäß einer vorteilhaften Ausführungsform ist der wenigstens eine Feststoffbestandteil ausgewählt aus der Gruppe bestehend aus MoS₂, WS₂, SnS₂, NbS₂, TaS₂, Graphit, Graphitfluorid, Graphitoxid, hexagonales Bornitrid, Silberniob-Selenid, TiN, Si₃N₄, TiB₂, WC, TaC, B₄C, Al₂O₃, ZrO₂, kubisches BN, Diamant, MoSe₂, WSe₂, TaSe₂, NbSe₂, SiC, Al₂O₃ umhülltes Graphit, Al₂O₃ umhülltes MoS₂ und Al₂O₃ umhülltes WS₂ oder Mischungen daraus, bevorzugt aus MoS₂, WS₂, Graphit, Graphitoxid, hexagonales Bornitrid oder Mischungen daraus, bevorzugter aus Graphit, Graphitoxid, MoS₂, WS₂ oder Mischungen daraus und noch bevorzugter Graphit.

Al₂O₃-umhüllte Feststoffpartikel werden durch Umhüllung der Feststoffpartikel mittels kontrollierter Hydrolyse von Al(NO₃)₃ · 9 H₂O gemäß Huang & Xiong (2008) (Huang, Z.; Xiong, D. (2008): MoS2 coated with Al2O3 for Ni-MoS2/Al2O3 composite coatings by pulse electrodeposition. Surface & Coatings & Technology 202 (2008) 3208-3214) hergestellt.

Gemäß einer vorteilhaften Ausführungsform ist der wenigstens eine Feststoffbestandteil ausgewählt aus Silikaten, Sulfiden, Carbiden, Nitriden, Oxiden, Seleniden, Telluriden, organischen und anorganischen Polymeren. Vorzugsweise ist der wenigstens eine Feststoffbestandteil ausgewählt aus der Gruppe bestehend aus MoS₂, WS₂, SnS₂, NbS₂, TaS₂, hexagonales Bornitrid, Silberniob-Selenid, TiN, Si₃N₄, TiB₂, WC, TaC, B₄C, Al₂O₃, ZrO₂, kubisches BN, MoSe₂, WSe₂, TaSe₂, NbSe₂, SiC, Al₂O₃ umhülltes MoS₂ und Al₂O₃ umhülltes WS₂ oder Mischungen daraus, bevorzugt aus MoS₂, WS₂, hexagonales Bornitrid oder Mischungen daraus und bevorzugter aus MoS₂, WS₂ oder Mischungen daraus.

Gemäß einer weiteren vorteilhaften Ausführungsform ist der wenigstens eine Feststoffbestandteil ausgewählt aus Kohlenstoffmodifikationen. Bevorzugt ist der wenigstens eine Feststoffbestandteil ausgewählt aus der Gruppe bestehend aus Graphit, Graphitfluorid, Graphitoxid, Diamant, Al₂O₃ umhülltes Graphit oder Mischungen daraus, bevorzugt aus Graphit, Graphitfluorid, Graphitoxid, Al₂O₃ umhülltes Graphit oder Mischungen daraus, bevorzugter aus Graphit, Graphitoxid oder Mischungen daraus und noch bevorzugter Graphit.

Vorzugsweise enthält der Elektrolyt noch wenigstens einen weiteren Feststoffbestandteil. Dieser wenigstens eine weitere Feststoffbestandteil kann ebenfalls aus den oben genannten Feststoffbestandteilen ausgewählt sein.

Vorteilhaft kann der Elektrolyt zusätzlich einen Glanzbildner enthalten. Hierfür wird üblicherweise eine Menge von 1 bis 1000 mg/L, bevorzugt weniger als 50 mg/L, eingesetzt. Beispiele für Glanzbildner sind Phenylpropionsäure, Phenylpropionsäureamid, Triaminotriphenylmethan, 1-(p-Aminophenyl)-3-methylpyrazol, Stearamidopropyldimethyl-(β-hydroxyethyl)ammoniumdihydrogenphosphat, 1,5-Diphenylcarbazid und Chloralhydrat.

Der erfindungsgemäße Silberelektrolyt kann optional noch weitere Additive wie Stabilisatoren, Dispergiermittel und/oder Kornverfeinerer enthalten, um die Performance des Elektrolyts noch weiter zu verbessern und die Eigenschaften der abgeschiedenen Dispersions-Silberschicht zu verbessern.

Die vorgenannten Ausführungsformen können auch kombiniert werden.

Ein weiterer Gegenstand der Erfindung ist ein Verfahren zur Abscheidung einer Dispersions-Silberschicht auf einem Substrat erfindungsgemäß umfassend die Schritte,
a) Vorlegen eines erfindungsgemäßen Silberelektrolyts,
b) Einbringen eines Substrats in den Silberelektrolyten, und
c) Durchführen der Abscheidung.

Das erfindungsgemäße Verfahren umfasst das Abscheiden einer Dispersions-Silberschicht auf einem Substrat aus einem erfindungsgemäßen Silberelektrolyt nach einer der oben beschriebenen Ausführungsformen. Die oben gemachten Angaben zum erfindungsgemäßen Elektrolyt haben entsprechend auch für das Verfahren Geltung.

In dem erfindungsgemäßen Verfahren können alle üblichen zur Abscheidung von Silberschichten und Dispersions-Silberschichten verwendeten Substrate verwendet werden. In dem erfindungsgemäßen Verfahren umfasst das Substrat bevorzugt ein Metall oder eine Metalllegierung. Die Dispersions-Silberschicht wird dann auf dem Metall beziehungsweise der Metalllegierung abgeschieden. Das Metall oder die Metalllegierung können beispielweise Kupfer und/oder Eisen enthalten oder daraus bestehen. Ebenso können weitere Zwischenschichten aus anderen Metallen wie beispielsweise Nickel oder Silber vorhanden sein. Solche Schichten haben verschiedene Funktionen wie zum Beispiel Erhöhen der Haftung der Dispersions-Silberschicht auf dem Substrat, Schutz vor Korrosion, Schutz vor Diffusion oder Verbesserung anderer physikalischer Eigenschaften.

Als Abscheideverfahren können galvanische oder außenstromlose Verfahren eingesetzt werden. Beispiele für galvanische Verfahren sind die Trommel-, Gestell- oder Bandgalvanisierung.

Das Substrat wird vorzugsweise vor der Beschichtung gereinigt, bevorzugt entfettet. Das Substrat kann verschiedenen Vorbehandlungsschritten unterzogen werden. Hierbei können Kupferschichten, Nickelschichten und/oder weitere Silberschichten abgeschieden werden.

Vorzugsweise wir das Substrat vor Schritt a) vorversilbert. Vorzugsweise wird das Substrat vor der Vorversilberung vernickelt.

Gemäß einer vorteilhaften Ausführungsform beträgt die Temperatur bei der Durchführung der Abscheidung in Schritt c) 1°C bis 50°C, bevorzugt 5°C bis 40°C, bevorzugter 5°C bis 35°C, noch bevorzugter 10°C bis 30 °C, noch weiter bevorzugt 15°C bis 25°C, noch mehr bevorzugt 17°C bis 22°C und am bevorzugtesten 20°C.

In einer vorteilhaften Ausführungsform beträgt die Stromdichte in Schritt c) von 1,2 A/dm² bis 35,0 A/dm², bevorzugt von 1,5 A/dm² bis 30,0 A/dm², bevorzugter von 2,0 A/dm² bis 25,0 A/dm², noch bevorzugter von 2,5 A/dm² bis 25,0 A/dm² und noch weiter bevorzugt von 2,5 A/dm² bis 20,0 A/dm².

Gemäß einer vorteilhaften Ausführungsform ist das Verfahren eine Bandgalvanisierung.

Die Dauer der Abscheidung ist entsprechend der gewünschten, zu erzielenden Schichtdicke sowie der Anwendung Bandgalvanik zu wählen. Grundsätzlich ist die Dauer der Abscheidung nicht beschränkt.

Vorzugsweise beträgt die Dauer der Abscheidung in Schritt c) von 0,1 min bis 20 min, bevorzugt von 0,15 min bis 15 min und bevorzugter von 0,3 min bis 10 min.

Vorzugsweise wird Schritt a) vor Schritt b) durchgeführt, weiter bevorzugt wird Schritt b) von Schritt c) gefolgt.

Mithilfe des erfindungsgemäßen Verfahrens kann eine Kontaktoberfläche hergestellt werden, bei der auf einem Substrat eine elektrochemisch abgeschiedene Dispersions-Silberschicht angeordnet ist,
wobei die Dispersions-Silberschicht Partikel wenigstens eines fein-dispersen Feststoffbestandteils mit einer mittleren Partikelgröße, d₅₀, von 10nm - 100pm enthält;
wobei die Dispersions-Silberschicht den wenigstens einen fein-dispersen Feststoffbestandteil in einem Mengenbereich von 3,1 Gew.% bis 10 Gew.% bezogen auf das Gesamtgewicht der Dispersions-Silberschicht enthält; und
wobei die Kontaktoberfläche eine Mikrorauheit, beschrieben durch den Mittenrauwert Ra, im Bereich von 0,05 µm bis 20 µm aufweist.

Die oben gemachten Angaben zum erfindungsgemäßen Elektrolyt und dem erfindungsgemäßen Verfahren haben entsprechend auch für die mittels des erfindungsgemäßen Verfahrens herstellbare Kontaktoberfläche Geltung. Der fein-disperse Feststoffbestandteil kann somit aus den oben genannten Feststoffbestandteilen ausgewählt sein. Als Substrate für die Kontaktoberflächen können alle vorgenannten Substrate verwendet werden.

Die Kontaktoberflächen erlauben es, dass nur ein Kontaktpartner mit einer Dispersions-Silberoberfläche ausgestattet ist, wenn als Feststoffbestandteil ein Trockenschmierstoff verwendet wird. Der andere Kontaktpartner kann aus einer konventionellen Metalloberfläche ohne Feststoffbestanteil, insbesondere Trockenschmierstoffbestanteil, bestehen. Hierdurch können Kosten reduziert werden. Es können aber auch beide Kontaktpartner mit einer Dispersions-Silberoberfläche ausgestattet sein.

Die Kontaktoberflächen zeichnen sich durch ihre vorteilhafte Verschleißbeständigkeit aus. Insbesondere ist die Beständigkeit bei Steckvorgängen hinsichtlich des Verschleißes durch Mikrobewegungen, sogenanntes Fretting, deutlich verbessert. Solche Mikrobewegungen treten beispielsweise bei Steckern im Automobil durch die Vibrationen bei Betrieb des Fahrzeuges auf. Auch durch Temperaturschwankungen kann es zu Verschleiß durch Mikrobewegungen kommen.

Vorzugsweise enthält die Kontaktoberfläche noch wenigstens einen weiteren Feststoffbestandteil. Vorzugsweise ist der wenigstens noch eine weitere Feststoffbestandteil ein Trockenschmierstoff oder ein Hartstoff. Bevorzugt ist der wenigstens noch eine weitere Feststoffbestandteil ausgewählt aus den oben zum erfindungsgemäßen Elektrolyten genannten Feststoffbestandteilen, welche entsprechend auch für die Kontaktoberfläche Geltung haben.

In einer vorteilhaften Ausführungsform weisen die Partikel des wenigstens einen fein-dispersen Feststoffbestandteils eine mittlere Partikelgröße (d₅₀) von 50nm bis 75µm, bevorzugt 100nm bis 50µm, bevorzugter 500nm bis 35µm und noch bevorzugter von 1µm bis 20µm auf. Das gleiche gilt für Partikel weiterer Feststoffbestandteile.

Der Gehalt an wenigstens einem fein-dispersen Feststoffbestandteil in der Dispersions-Silberschicht kann durch Änderung der Abscheidebedingungen variiert werden. Hierdurch können die Eigenschaften der Oberfläche hinsichtlich Kontaktwiderstand und Verschleißbeständigkeit eingestellt werden.

Vorzugsweise enthält die Dispersions-Silberschicht den wenigstens einen fein-dispersen Feststoffbestandteil in einer Menge von mindestens 3,1 Gew.%, bevorzugter mindestens 3,2 Gew.%, noch bevorzugter mindestens 3,3 Gew.% und noch weiter bevorzugt mindestens 3,5 Gew.% bezogen auf das Gesamtgewicht der Dispersions-Silberschicht.

Vorzugsweise ist der wenigstens eine fein-disperse Feststoffbestandteil ausgewählt aus Silikaten, Sulfiden, Carbiden, Nitriden, Oxiden, Seleniden, Telluriden, organischen und anorganischen Polymeren und Kohlenstoffmodifikationen.

Gemäß einer vorteilhaften Ausführungsform der Kontaktoberfläche ist der wenigstens eine fein-disperse Feststoffbestandteil ausgewählt aus Silikaten, Sulfiden, Carbiden, Nitriden, Oxiden, Seleniden, Telluriden, organischen und anorganischen Polymeren. Vorzugsweise ist der wenigstens eine fein-disperse Feststoffbestandteil ausgewählt aus der Gruppe bestehend aus MoS₂, WS₂, SnS₂, NbS₂, TaS₂, hexagonales Bornitrid, Silberniob-Selenid, TiN, Si₃N₄, TiB₂, WC, TaC, B₄C, Al₂O₃, ZrO₂, kubisches BN, MoSe₂, WSe₂, TaSe₂, NbSe₂, SiC, Al₂O₃ umhülltes MoS₂ und Al₂O₃ umhülltes WS₂ oder Mischungen daraus, bevorzugt aus MoS₂, WS₂, hexagonales Bornitrid oder Mischungen daraus und bevorzugter aus MoS₂, WS₂ oder Mischungen daraus.

Gemäß einer weiteren vorteilhaften Ausführungsform der Kontaktoberfläche ist der wenigstens eine fein-disperse Feststoffbestandteil ausgewählt aus Kohlenstoffmodifikationen. Bevorzugt ist der wenigstens eine fein-disperse Feststoffbestandteil ausgewählt aus der Gruppe bestehend aus Graphit, Graphitfluorid, Graphitoxid, Diamant, Al₂O₃ umhülltes Graphit oder Mischungen daraus, bevorzugt Graphit, Graphitfluorid, Graphitoxid, Al₂O₃ umhülltes Graphit oder Mischungen daraus, bevorzugter aus Graphit, Graphitoxid oder Mischungen daraus und noch bevorzugter aus Graphit.

Gemäß einer weiteren vorteilhaften Ausführungsform ist der wenigstens eine fein-disperse Feststoffbestandteil ausgewählt aus der Gruppe bestehend aus MoS₂, WS₂, SnS₂, Graphit, Graphitoxid, Graphitfluorid, hexagonales Bornitrid, Silberniob-Selenid, SiC, Al₂O₃ umhülltes Graphit, Al₂O₃ umhülltes MoS₂ und Al₂O₃ umhülltes WS₂ oder Mischungen daraus, bevorzugt MoS₂, WS₂, Graphit und hexagonales Bornitrid oder Mischungen daraus.

In einer weiteren Ausführungsform der Kontaktoberfläche ist der wenigstens eine fein-disperse Feststoffbestandteil ausgewählt aus Graphit, MoS₂, WS₂ oder Mischungen daraus, bevorzugt Graphit, und die Dispersion-Silberschicht enthält den wenigstens einen fein-dispersen Feststoffbestandteil in einer Menge von mindestens 3,1 Gew.%, bevorzugt mindestens 3,2 Gew.%, bevorzugter mindestens 3,3 Gew.% und noch bevorzugter mindestens 3,5 Gew.% bezogen auf das Gesamtgewicht der Dispersions-Silberschicht.

Vorzugsweise weist die Dispersions-Silberschicht einen Reibkoeffizienten µ bei 0,3 N nach 100 Zyklen von weniger als 1,4, bevorzugt weniger als 1,2, bevorzugter weniger als 1,0, noch bevorzugter weniger als 0,8, noch weiter bevorzugt weniger als 0,6 und noch bevorzugter von 0,4 auf.

Vorzugsweise beträgt der elektrische Kontaktwiderstand bei 1,0 N nach 100 Zyklen weniger als 1,0 mΩ, bevorzugt weniger als 0,8 mΩ, bevorzugter weniger als 0,75 mΩ, noch bevorzugter weniger als 0,7 mΩ und noch weiter bevorzugt weniger als 0,65 mΩ.

Vorzugsweise weist die Dispersions-Silberschicht einen Reibkoeffizienten µ bei 1,0 N nach 100 Zyklen von weniger als 1,0, bevorzugt weniger als 0,8, bevorzugter weniger als 0,6, noch bevorzugter weniger als 0,5 und noch weiter bevorzugt weniger als 0,45 auf.

Vorzugsweise beträgt die Schichtdicke der abgeschiedenen Dispersions-Silberschicht zwischen 0,5 µm bis 200 µm, bevorzugt 1 µm bis 100 µm, besonders bevorzugt 1,1 µm bis 25 µm.

Vorteilhaft handelt es sich bei der Kontaktoberfläche um eine mikroraue Oberfläche. Die Mikrorauheit wirkt sich vorteilhaft auf die tribologischen und elektrischen Eigenschaften aus.

Die Kontaktoberfläche weist eine Mikrorauheit, im Folgenden beschrieben durch den Mittenrauwert Ra, von mindestens 0,05 µm, bevorzugt von mindestens 0,1 µm, bevorzugter von mindestens 0,2 µm und noch bevorzugter von mindestens 0,3 µm auf.

Vorzugsweise weist die Kontaktoberfläche eine Mikrorauheit, im Folgenden beschrieben durch den Mittenrauwert Ra, im Bereich von 0,1 µm bis 10 µm, bevorzugt von 0,2 µm bis 6 µm und bevorzugter von 0,3 µm bis 5 µm auf.

Vorzugsweise haben die Kontaktoberflächen eine Fretting-Lebensdauer nach Song bei 1,0 N von mehr als 7500 Zyklen, bevorzugt von mehr als 10.000 Zyklen, bevorzugter von mehr als 15.000 Zyklen, noch bevorzugter von mehr als 20.000 Zyklen und noch mehr bevorzugt von mehr als 25.000 Zyklen.

Die vorgenannten Kontaktoberflächen können mittels des vorbeschriebenen erfindungsgemäßen Verfahrens hergestellt werden.

Die vorbeschriebenen Angaben zum erfindungsgemäßen Elektrolyten und dem erfindungsgemäßen Verfahren haben entsprechend auch für die Kontaktoberflächen erhältlich mittels des erfindunsgemäßen Verfahrens Geltung. Der fein-disperse Feststoffbestandteil kann somit aus den oben genannten Feststoffbestandteilen ausgewählt sein. Als Substrate für die Kontaktoberflächen können alle vorgenannten Substrate verwendet werden.

Die Kontaktoberfläche kann für elektrische Kontakte in Steckverbindungen verwendet werden.

Ein weiterer Gegenstand der Erfindung betrifft die Verwendung des erfindungsgemäßen Dispersions-Silberelektrolyten zur Beschichtung eines Substrats mittels Bandanwendung.

Weitere Vorteile der Erfindung ergeben sich aus der nachfolgenden Beschreibung von bevorzugten Ausführungsbeispielen, die jedoch in keiner Weise als einschränkend zu verstehen sind. Alle Ausführungsformen der Erfindung können im Rahmen der Erfindung miteinander kombiniert werden.

### Ausführungsbeispiele

### Materialien

Für die Versuche wurden Kupferbleche (Material: CuFe2P) der Firma Wieland-Werke AG verwendet. Der Mittenrauwert Ra der unbeschichteten Bleche beträgt 0,47 µm.

KCN wurde von der Firma Bücherl und K[Ag(CN)₂] wurde von der Firma Umicore bezogen.

SLOTOSIL SG 1911 und SLOTOSIL SG 1912 sind Zusätze für Silberelektrolyte auf Basis von KCN/Kaliumsilbercyanid für die Dispersionsabscheidung der Firma Dr.-Ing. Max Schlötter GmbH & Co. KG. SLOTOSIL SG 1911 enthält ein Naphthalinsulfonsäurederivat als kornverfeinernden Zusatz. SLOTOSIL SG 1912 enthält ein Alkylsulfat als dispersionsstabilisierenden Zusatz.

CUPRUM 11, ein Glanzzusatz, CUPRUM 12, ein Netzmittel, und der Anlaufschutzkonzentrat AG 111 wurden von der Firma Dr.-Ing. Max Schlötter GmbH & Co. KG bezogen.

Die verwendeten Graphitpartikel stammen von der Graphit Kropfmühl AG. Das verwendete Graphitpulver der Sorte UF2 weist eine mittlere Partikelgröße von d₅₀ = 4,5 µm auf.

### Messmethoden

### Bestimmung Gehalt an Feststoffbestandteil

Der Gehalt an Feststoffbestandteil (in Gew.%) wurde mittels energiedispersiver Röntgenspektroskopie (energy dispersive X-ray spectroscopy, EDX) bestimmt. Dazu wurden mit einem *X-Flash Detector 410-M* (Bruker AXS Microanalysis GmbH), welches in einem Elektronenmikroskop *JSM-6610 LV* (Hersteller: JEOL) mit einer Anregungsspannung von 25 kV Messungen an den abgeschiedenen Dünnschichten durchgeführt. Die Messungen wurden mit dem Programm Esprit (Bruker) ausgewertet.

### Bestimmung der Durchmesser der Feststoffbestandteile (d₅₀)

Die Durchmesser der Partikel der Feststoffbestandteile in Form der mittleren Partikelgröße d₅₀ wurde mittels Laserbeugung mit einem Helos - Gerät der Firma Sympatec bestimmt.

### Messung Mikrorauheit (als Mittenrauwert Ra)

Die Mikrorauheit (als Mittenrauwert Ra) wurde mittels optischem Messverfahren mit einem Konfokal-3D-Laserscanningmikroskop *VK-X100* (Hersteller: Keyence Corporation) und anschließender Auswertung mit dem Programm *Multi file analyzer* (Keyence Corporation) ermittelt.

### Beschichtung Kupferbleche

### Galvanisierung

Es wurden Probenkörper mit Dispersions-Silberschichten beschichtet, um Kontaktoberflächen zu erhalten. Die Kupferbleche wurden zunächst verkupfert, danach vorversilbert und anschließend mit einer Dispersions-Silberschicht überzogen. Zwischen jedem Schritt wurde gründlich mit Wasser gespült.

Die Galvanisierung der Kupferbleche umfasste die folgenden Schritte:
1. und 2. Schritt: Entfettung der Substrate nach bekannten Verfahren; erster alkalischer Entfettungsschritt bei 60°C für 1 min mit Ultraschallunterstützung. Zweiter alkalisch elektrolytischer Entfettungsschritt bei Raumtemperatur (25°C) über eine Behandlungszeit von 2 bis 3 min.
3. Schritt: Ätzen von Kupfer mit Bad von schwefelsaurer, komplexbildnerfreier Kupferaktivierung. Der Einsatz der Aktivierung erfolgt bei Raumtemperatur (25°C) für 0,5 min.
4. Schritt: Behandlung mit Glanzkupferbad, welches ein cyanidischer Elektrolyt zur Abscheidung glänzender Oberflächen war. Der Elektrolyt, bestehend aus 10 g/l KOH, 115 g/l KCN, 64 g/l CuCN sowie 1,5 ml/l Glanzzusatz CUPRUM 11; 2,5 ml/l Grundzusatz CUPRUM 12 wurde bei 60°C betrieben. Der Elektrolyt wurde mit 2 A/dm² eingesetzt.
5. Schritt: Die Vorversilberung wurde in einem Vorversilberungsbad mit einem cyanidischen Elektrolyt mit niedrigem Silbergehalt (120 g/l KCN; 3,7 g/l K[Ag(CN)₂]) durchgeführt. Die Vorversilberung wurde bei Raumtemperatur (25°C) betrieben. Als kathodische Stromdichte wurden 2 A/dm² gewählt.
6. Schritt: Abscheiden der Dispersions-Silberschichten
Die gemäß oben geschilderter Vorgehensweise vorbehandelten Bleche wurden zur Beschichtung auf eine Rotationszelle montiert.
Der Elektrolyt wies folgende Zusammensetzung auf:

| | |
|---|---|
| KCN: | 154 g/L |
| K[Ag(CN)₂]: | 56 g/L |
| SLOTOSIL SG 1911: | 20 mL/L |
| SLOTOSIL SG 1912: | 20 mL/L |
| Graphit UF2: | 70 g/L |

Die Bleche wurden bei unterschiedlichen Rotationsgeschwindigkeiten beschichtet, um eine Bandgeschwindigkeit von 30 m/min, 60 m/min und 100 m/min zu simulieren. Die Abscheidung fand bei einer Stromdichte von 2,5 A/dm², 5 A/dm², 10 A/dm², 15 A/dm² beziehungsweise 20 A/dm² statt. Detailierte Angaben zu den einzelnen Versuchen sind in Tabelle 1 aufgelistet.
7. Schritt: Anlaufschutz-Nachbehandlung; Der Anlaufschutz, 160 ml/l Anlaufschutzkonzentrat AG 111, wurde bei 50°C und pH 5,3 eingesetzt. Die beschichteten Probekörper wurden für 2 min in den Anlaufschutz getaucht. Anschließend wurde mit entionisiertem Wasser gespült und getrocknet.

In Tabelle 1 sind die Ergebnisse der Charakterisierung der abgeschiedenen Dispersions-Silberschichten gezeigt. Die Graphitgehalte der graphithaltigen Dispersions-Silberschichten wurden mittels EDX bestimmt.

**Tabelle 1: Ergebnisse Bandgalvanisierung**

| Beispiele | Geschwindigkeit (m/min) | Stromdichte (A/dm²) | Dauer Beschichtung (min) | Elektrolyttemperatur (°C) | Graphitgehalt EDX (Gew.%) | Mittenrauwert Ra (µm) |
|---|---|---|---|---|---|---|
| 1* | 100 | 2,5 | 8 | 21 | 1,76 | 1,38 |
| 2 | 60 | 2,5 | 8 | 21 | 3,13 | 2,26 |
| 3 | 30 | 2,5 | 8 | 21 | 4,98 | 2,51 |
| 4* | 100 | 5 | 4 | 21 | 1,69 | 1,09 |
| 5 | 60 | 5 | 4 | 22 | 3,73 | 2,95 |
| 6 | 30 | 5 | 4 | 22 | 6,39 | 2,43 |
| 7* | 100 | 10 | 2 | 22 | 1,33 | 1,00 |
| 8 | 60 | 10 | 2 | 22 | 6,45 | 3,66 |
| 9 | 30 | 10 | 2 | 22 | 8,32 | 4,39 |
| 10* | 100 | 15 | 1,5 | 22 | 2,23 | 1,08 |
| 11 | 60 | 15 | 1,5 | 22 | 6,36 | 4,90 |
| 12 | 30 | 15 | 1,5 | 22 | 8,69 | 6,33 |
| 13* | 100 | 20 | 1 | 23 | 2,05 | 1,00 |
| 14 | 60 | 20 | 1 | 23 | 7,54 | 4,85 |
| 15 | 30 | 20 | 1 | 23 | 7,63 | 16,03 |

| | | | | | | |
|---|---|---|---|---|---|---|
| *: nicht erfindungsgemäßes Beispiel | | | | | | |

Die in Tabelle 1 dargestellten Ergebnisse zeigen, dass der erfindungsgemäße Elektrolyt zur Abscheidung von Dispersions-Silberschichten geeignet ist. Im Vergleich zu aus dem Stand der Technik bekannten Elektrolyten, die zur Herstellung von Dispersions-Silberschichten verwendet werden, sind die erzielbaren Partikelgehalte wesentlich höher, was eine deutliche Verbesserung darstellt.

Der erfindungsgemäße Elektrolyt ist im Gegensatz zu bekannten Elektrolyten, die zur Herstellung von Dispersions-Silberschichten verwendet werden, speziell für die Abscheidung von Dispersions-Silberschichten mittels Bandverfahren (Reel-to-reel-Verfahren) geeignet.

Durch den Einbau von Feststoffbestandteilen insbesondere eines Trockenschmierstoffs in die Dispersions-Silberschicht werden, speziell bei hohen Konzentrationen an Feststoffbestandteil, Dispersions-Silberschichten mit wesentlich besseren Gleiteigenschaften im Vergleich zu Reinsilberschichten erhalten. Eine hohe Feststoffpartikelkonzentration in der Schicht ist speziell für den Verschleiß durch Mikrovibrationen (Fretting) vorteilhaft. Bei kleinen Kontaktpunkten ist bei hohen Feststoffpartikelkonzentrationen die Wahrscheinlichkeit höher, dass im Kontaktbereich eine für die Verschleißminderung ausreichende Feststoffparktikelmenge vorhanden ist. Diese Eigenschaft ist besonders für Kontaktoberflächen von Steckverbindern von Bedeutung und wird, wie die Beispiele zeigen, mit dem erfindungsgemäßen Verfahren erzielt.

## Patentansprüche

1. Silberelektrolyt zur Abscheidung von Silberschichten auf Substraten umfassend
a) Kaliumsilbercyanid mit einem Gehalt von mindestens 50 g/L,
b) Kaliumcyanid mit einem Gehalt von mindestens 100 g/L,
c) wenigstens einen Kornverfeinerer mit einem Gehalt von 0,2 bis 10 g/L, wobei Kornverfeinerer Substanzen sind, die die Korngröße der Silberabscheidung zu kleineren Korngrößen verschieben;
d) wenigstens ein Dispergiermittel mit einem Gehalt von 1 bis 10 g/L und
e) wenigstens einen Feststoffbestandteil mit einem Gehalt von 1 bis 150 g/L,
wobei die Partikel des Feststoffbestandteils eine mittlere Partikelgröße, d₅₀, von 10 nm - 100 µm aufweisen;
wobei der wenigstens eine Kornverfeinerer ausgewählt ist aus Naphthalinsulfonsäure, Naphthalinsulfonsäurederivaten oder Mischungen daraus; und
wobei das wenigstens eine Dispergiermittel Alkylsulfate mit C₁-C₂₀-Alkylresten, die unsubstituiert oder wahlweise substituiert sein können, enthält.

2. Silberelektrolyt gemäß einem der voranstehenden Ansprüche, wobei die Partikel des wenigstens einen Feststoffbestandteils eine mittlere Partikelgröße, d₅₀, von 1 µm bis 20 µm aufweisen.

3. Silberelektrolyt gemäß einem der voranstehenden Ansprüche, wobei der wenigstens eine Feststoffbestandteil ausgewählt ist
a. aus der Gruppe bestehend aus Graphit, Graphitfluorid, Graphitoxid, Diamant, Al₂O₃ umhülltes Graphit oder Mischungen daraus, bevorzugt Graphit, Graphitfluorid, Graphitoxid, Al₂O₃ umhülltes Graphit oder Mischungen daraus, bevorzugter Graphit, Graphitoxid oder Mischungen daraus und noch bevorzugter Graphit;
oder
b. aus der Gruppe bestehend aus MoS₂, WS₂, SnS₂, NbS₂, TaS₂, hexagonales Bornitrid, Silberniob-Selenid, TiN, Si₃N₄, TiB₂, WC, TaC, B₄C, Al₂O₃, ZrO₂, kubisches BN, MoSe₂, WSe₂, TaSe₂, NbSe₂, SiC, Al₂O₃ umhülltes MoS₂ und Al₂O₃ umhülltes WS₂ oder Mischungen daraus, bevorzugt MoS₂, WS₂, hexagonales Bornitrid oder Mischungen daraus und bevorzugter MoS₂, WS₂ oder Mischungen daraus.

4. Verfahren zur Abscheidung einer Dispersions-Silberschicht auf einem Substrat umfassend die Schritte,
a) Vorlegen eines Silberelektrolyts gemäß Ansprüchen 1 bis 3,
b) Einbringen eines Substrats in den Silberelektrolyten, und
c) Durchführen der Abscheidung.

5. Verfahren gemäß Anspruch 4, wobei die Temperatur in Schritt c) 15°C bis 30°C beträgt.

6. Verfahren gemäß Anspruch 4 oder 5, wobei die Stromdichte in Schritt c) von 2,0 A/dm² bis 25,0 A/dm² und bevorzugt 2,5 A/dm² bis 20,0 A/dm² beträgt.

7. Verfahren gemäß Ansprüchen 4 bis 6, wobei das Verfahren eine Bandgalvanisierung ist.

8. Verwendung eines Dispersions-Silberelektrolyts gemäß einem der Ansprüche 1 bis 3 zur Beschichtung eines Substrats mittels Bandanwendung.

## Claims

1. A silver electrolyte for depositing silver layers on substrates, comprising
a) potassium silver cyanide with a content of at least 50 g/L;
b) potassium cyanide with a content of at least 100 g/L;
c) at least one grain refiner with a content of 0.2 to 10 g/L, wherein grain refiners are substances which change the grain size of the silver deposit to smaller grain sizes;
d) at least one dispersing agent with a content of 1 to 10 g/L; and
e) at least one solid component with a content of 1 to 150 g/L, wherein the particles of the solid component have an average particle size, d₅₀, of 10 nm - 100 um;
wherein the at least one grain refiner is selected from naphthalene sulfonic acid, naphthalene sulfonic acid derivatives, or mixtures thereof; and
wherein the at least one dispersing agent contains alkyl sulfates have C₁-C₂₀ alkyl radicals which may be unsubstituted or optionally substituted.

2. The silver electrolyte according to any one of the preceding claims, wherein the particles of the at least one solid component have an average particle size, d₅₀, of 1 µm to 20 µm.

3. The silver electrolyte according to any one of the preceding claims, wherein the at least one solid component is selected
a. from the group consisting of graphite, graphite fluoride, graphite oxide, diamond, Al₂O₃-coated graphite, or mixtures thereof, preferably graphite, graphite fluoride, graphite oxide, Al₂O₃ coated graphite or mixtures thereof, more preferably graphite, graphite oxide, or mixtures thereof, and even more preferably graphite;
or
b. from the group consisting of MoS₂, WS₂, SnS₂, NbS₂, TaS₂, hexagonal boron nitride, silver niobium selenide, TiN, Si₃N₄, TiB₂, WC, TaC, B₄C, Al₂O₃, ZrO₂, cubic BN, MoSe₂, WSe₂, TaSe₂, NbSe₂, SiC, Al₂O₃-coated MoS₂, and Al₂O₃-coated WS₂, or mixtures thereof, preferably MoS₂, WS₂, hexagonal boron nitride, or mixtures thereof, and more preferably MoS₂, WS₂, or mixtures thereof.

4. A method for depositing a dispersion silver layer on a substrate, comprising the steps
a) providing a silver electrolyte according to claims 1 to 3;
b) introducing a substrate into the silver electrolyte; and
c) performing the depositing.

5. The method according to claim 4, wherein the temperature in step c) is 15°C to 30°C.

6. The method according to claim 4 or 5, wherein the current density in step c) is from 2.0 A/dm² to 25.0 A/dm², and preferably 2.5 A/dm² to 20.0 A/dm².

7. The method according to claims 4 to 6, wherein the method is strip electroplating.

8. Use of a dispersion silver electrolyte according to any one of claims 1 to 3 for coating a substrate by means of strip application.

## Revendications

1. Solution d'argenture électrolytique destinée au dépôt de couches d'argent sur des substrats et comprenant
a) du cyanure de potassium et d'argent d'une teneur d'au moins 50 g/L,
b) du cyanure de potassium d'une teneur d'au moins 100 g/L,
c) au moins un agent d'affinage de grain d'une teneur de 0,2 à 10 g/L, dans laquelle les agents d'affinage de grain sont des substances qui font passer la granulométrie du dépôt d'argent à des granulométries plus faibles ;
d) au moins un agent dispersant d'une teneur de 1 à 10 g/L, et
e) au moins un composant solide d'une teneur de 1 à 150 g/L, dans laquelle les particules du composant solide ont une granulométrie moyenne, d₅₀, de 10 nm à 100 µm ;
dans laquelle l'au moins un agent d'affinage de grain est choisi parmi l'acide naphtalène sulfonique, les dérivés de l'acide naphtalène sulfonique ou leurs mélanges ; et
dans laquelle l'au moins un agent dispersant contient des sulfates d'alkyle ayant des radicaux alkyle en C₁ à C₂₀ qui peuvent être non substitués ou éventuellement substitués.

2. Solution d'argenture électrolytique selon l'une des revendications précédentes, dans laquelle les particules de l'au moins un composant solide ont une granulométrie moyenne, d₅₀, de 1 µm à 20 µm.

3. Solution d'argenture électrolytique selon l'une des revendications précédentes, dans laquelle l'au moins un composant solide est choisi
a. dans le groupe constitué du graphite, du fluorure de graphite, de l'oxyde de graphite, du diamant, du graphite revêtu d'Al₂O₃ ou de leurs mélanges, de préférence du graphite, du fluorure de graphite, de l'oxyde de graphite, du graphite revêtu d'Al₂O₃ ou de leurs mélanges, de manière davantage préférée du graphite, de l'oxyde de graphite ou de leurs mélanges et de manière encore davantage préférée du graphite ;
ou
b. dans le groupe constitué de MoS₂, de WS₂, de SnS₂, de NbS₂, de TaS₂, du nitrure de bore hexagonal, du séléniure d'argent niobium, de TiN, de Si₃N₄, de TiB₂, de WC, de TaC, de B₄C, d'Al₂O₃, de ZrO₂, de BN cubique, de MoSe₂, de WSe₂, de TaSe₂, de NbSe₂, de SiC, de MoS₂ revêtu d'Al₂O₃ et de WS₂ revêtu d'Al₂O₃ ou leurs mélanges, de préférence de MoS₂, de WS₂, de nitrure de bore hexagonal ou de leurs mélanges et de manière davantage préférée de MoS₂, de WS₂ ou de leurs mélanges.

4. Procédé de dépôt d'une couche de dispersions d'argent sur un substrat, comprenant les étapes de,
a) Fourniture d'une solution d'argenture électrolytique selon les revendications 1 à 3,
b) Introduction d'un substrat dans la solution d'argenture électrolytique, et
c) Réalisation du dépôt.

5. Procédé selon la revendication 4, dans lequel la température à l'étape c) est de 15°C à 30°C.

6. Procédé selon la revendication 4 ou 5, dans lequel la densité de courant à l'étape c) est de 2,0 A/dm² à 25,0 A/dm² et de préférence de 2,5 A/dm² à 20,0 A/dm².

7. Procédé selon les revendications 4 à 6, dans lequel le procédé est la galvanisation par bande.

8. Utilisation d'une solution d'argenture électrolytique de dispersions selon l'une des revendications 1 à 3 pour revêtir un substrat au moyen d'une application par bande.
